**Europäisches Patentamt**

**European Patent Office**

**Office européen des brevets**

(19)

(11) Publication number: **0 117 031**

**A1**

(12) **EUROPEAN PATENT APPLICATION**

(21) Application number: **84300115.7**

(22) Date of filing: **09.01.84**

(51) Int. Cl.³: **H 01 B 3/30**
**H 01 B 3/44, C 08 K 3/26**

(30) Priority: **10.01.83 GB 8300522**
**12.08.83 GB 8321819**

(43) Date of publication of application:
**29.08.84 Bulletin 84/35**

(84) Designated Contracting States:
**AT BE CH DE FR IT LI LU NL SE**

(71) Applicant: **BICC Public Limited Company**
**21, Bloomsbury Street**
**London, WC1B 3QN(GB)**

(72) Inventor: **Wilson, Ian Oswald**
**14 Meadway**
**Ruislip Middlesex(GB)**

(72) Inventor: **Poole, Michael John**
**31 James Lane**
**London E11 1NS(GB)**

(74) Representative: **Poole, Michael John et al,**
**BICC plc Patents Department 38 Ariel Way Wood Lane**
**London W12 7DX(GB)**

(54) **Methods of improving the resistance of insulating surfaces to tracking.**

(57) The resistance to tracking failure of an insulating surface of a plastics material based on a carbon chain polymer that is exposed to an electrical stress of at least $10^4$ V/m is increased by constituting a substantial fraction of its area of at least one stable species of low reactivity (standard free energy of decomposition at least 1 eV) capable of reversible addition reaction with energetic nucleophiles but substantially free of any irreversible reaction therewith. Preferably the reversible reaction is accompanied by a major change in geometry of the species, so that energy is efficiently transferred from energetic nucleophiles among breakdown products in the gaseous phase to the stable species. Preferred stable species is the carbonate ion.

EP 0 117 031 A1

## METHODS OF IMPROVING THE RESISTANCE
## OF INSULATING SURFACES TO TRACKING

This invention relates to methods of improving the resistance of insulating surfaces of plastics material to "tracking" under conditions in which electrical stress is applied along the surface, "tracking" being a breakdown mode in which electrically conductive paths are formed by carbonisation of the plastics material.

Previous workers have concentrated, with some degree of success, on three approaches:

firstly they have sought to chose polymeric materials (such as the cycloaliphatic epoxy resins and silicone resins) that contain large numbers of hetero-atoms in the polymer chain and consequently have a reduced carbonisation tendency: an approach that restricts the physical properties that can be achieved;

secondly they have used inert mineral fillers merely to reduce the concentration of carbonisable material; which also restricts the physical properties that can be achieved; and

thirdly they have used catalytic materials, such as labile hydroxides and transition metal oxides (especially alumina trihydrate and iron (III) oxide) to encourage reactions that compete with carbonisation: an approach that may risk precipitating failure by gross erosion or other mechanism.

The present invention is founded on the realisation that the initial effect of the solid surface is to concentrate stresses only, and that electrical breakdown will normally commence in the gaseous phase and should be countered as far as possible before it progresses into the solid phase.

More specifically, under practical conditions initial breakdown will take place in moist air containing various contaminants (notably ammonia and/or hydrogen chloride under standard test conditions as well as in service) and has the effect of producing (among other things) a multiplicity of energetic and highly reactive nucleophiles (such as ozone ($O_3$), oxygen atoms ($O^{\cdot}$), activated oxygen molecules ($O_2{}^*$), hydroxyl ions and radicals ($HO^-$, $HO^{\cdot}$), chlorine atoms ($Cl^{\cdot}$), chloride ions ($Cl^-$), immine radicals ($NH_2{}^{\cdot}$) and various oxides of nitrogen) a sizeable fraction of which will impinge on the solid surface.

If they impinge on polymeric material, the most likely reaction is the abstraction of a pendant atom or radical, typically a hydrogen atom or ion in the case of a predominantly hydrocarbon polymer or a halogen atom in the case of a halogenated polymer; if a number of atoms are abstracted before the resulting active centre is neutralised by reaction with a low-energy atom or ion or in some other way (hereinafter called a "repair reaction"), then carbonisation is inevitable.

If on the other hand the active species impinges on an inert filler particle, it will be reflected into the gaseous phase without substantial energy loss, and may subsequently impinge on the surface again and in any event, if charged (or if energetic enough to produce ionisation) contributes to the gaseous breakdown phenomenon.

It is therefore an object of the invention to reduce the concentration of energetic reactive nucleophiles present in the gaseous phase under actual or incipient breakdown conditions and/or to increase the concentration of low-energy reactive species available for repair reactions.

In accordance with the invention, the resistance to tracking failure of an insulating surface of a plastics material, based on one or more than one carbon chain polymer, that is exposed to an electrical stress of at least $10^4$ V/m is increased by constituting a substantial fraction of the area of the surface of at least one species (the "stable" species) of low reactivity that has a standard free energy of decomposition of at least 1 eV at 300°K and is capable of a reversible addition reaction with energetic nucleophiles but substantially free of any irreversible reaction therewith.

It will be evident that the said stable species should be bound to a solid phase present in the surface (at least after weathering or other superficial erosion) strongly enough to resist any tendency to volatilisation of the temporary product (or transition state) of the reversible reaction and should have as large as possible a collision cross-section; this points to a compound anion composed of atoms of low atomic number, say below 18 and preferably below 10.

Preferably the stable species is one which undergoes a major change in geometry on its reversible reaction with an active nucleophile, for example from trigonal to tetrahedral or tetrahedral to pyramidal, as this makes for efficient coupling between the translational energy (at least of the nucleophile) and the vibrational energy of the intermediate/transition state and so for the maximum transfer of energy from the nucleophile to the stable species that is consistent with avoiding decomposition of the stable species.

Exclusion of anions that do not form useful water-insoluble compounds gives a limited choice from which the carbonate ion is very much preferred. Of the insoluble carbonates, calcium carbonate is much preferred on account of ready availability, low cost,, and the low collision cross-section of its cation. Other options include calcium sulphate, calcium orthophosphate, barium sulphate, strontium carbonate and barium carbonate. Magnesium carbonate is unsuitable because its standard free energy of decomposition is only around 0.7 eV.

Although the stable species is effective only where it forms a part of the exposed surface, there is unlikely to be any disadvantage in its being present in the body of the plastics material and the constituent which provides it (hereinafter called the "characteristic filler") will usually be dispersed throughout the body.

The or each polymer may be any carbon chain polymer (i.e. a polymer not containing any significant number of hetero-atoms in the main polymer chain) that is compatible with the characteristic filler and adheres to it strongly enough to retain filler particles that are exposed at the surface; naturally however polymers (or polymer mixtures) that also have inherently good tracking resistance are preferred.

Preferred, at least when the characteristic filler is calcium carbonate, are hydrocarbon-chain polymers with side-chain hetero-atoms to enhance adhesion and loading capacity, and the most preferred side-chains are esters and other carboxylic groups. Typical preferred polymers are the semi-crystalline copolymers of ethylene with vinyl acetate, ethyl acrylate, methyl acrylate, butyl acrylate, and acrylic acid.

Preferably the stable species itself forms at least fifteen per cent of the surface of the plastics material, at least after weathering, and desirably much more provided this is consistent with required physical and other properties. Artificial weathering can be used, if necessary, to remove any polymer-rich skin that may be formed.

Since the characteristic filler needs to be exposed at the surface of the plastics body, the use of coupling agents that adhere tenaciously to its particle surfaces is precluded, but the use of dispersion aids (such as calcium stearate) that will be removed on weathering is acceptable and may often be useful.

The presence of inert fillers is clearly detrimental, but small amounts may be tolerated if they are needed to satisfy other requirements (e.g. flame retardance); some pigments may be used but others (notably titanium dioxide) degrade tracking resistance and careful choice is needed. The use of additives that dissolve in the polymer phase (e.g. crosslinking agents and/or promoters, antioxidants, stabilisers and processing aids) is relatively unrestricted.

EXAMPLE 1

An insulating body made of the semi-crystalline ethylene - 15% ethyl acrylate copolymer sold under the designation DPDM-6182 was compounded with 0.5% by weight of the antioxidant sold under the trade mark Flectol H, a polymerised dihydroquinoline, and moulded into an insulating body suitable for testing tracking resistance. When tested according to the method of ASTM specification D-2303, failure by erosion was observed at 2.5 kV and ultimate breakdown by flame failure occurred at about 3.0 kV.

In accordance with the invention, calcium carbonate fillers were now added to the formulation, using Snowcal 7ML, an uncoated natural calcium carbonate of average particle size 2.9 micrometre or Winnofil S, a precipitated calcium carbonate of nominal average particle size 75 nanometre coated with calcium stearate as a dispersing agent. Separate insulating bodies were made using loadings of 60, 80 and 100 parts by weight of each filler, so that the proportion of surface formed by carbonate ions is in both cases approximately 18, 23, and 27% respectively. In all six cases the ultimate breakdown voltage was raised above 3.5 kV; erosion inception was not observed below about 3.5 kV (a value of 3.25 being the normal specification limit of the test), except in the case of the composition containing 100 parts of Winnofil S for which it was observed at 2.75 kV; the reason for this relatively poor performance has not been established with certainty, but may be connected with the coating on this particular calcium carbonate.

EXAMPLE 2

Similar results were obtained with compositions based on the semi-crystalline ethylene-vinyl acetate copolymer sold under the trade mark Evatane 28-05.

The compositions of the preceding examples, especially those with 80 parts of either of the calcium carbonates, are suitable for the manufacture of heat-shrink components for high-voltage electrical applications. They can be extruded to form simple tubular shapes or injection moulded to obtain more complex shapes and are crosslinked to the required degree by high-energy irradiation to a dose of about 20 Mrad. They may then be expanded 2 to 3 times by pre-heating to about 140°C and blowing into a cold mould, so obtaining products with a recovery temperature of about 140°.

Compositions similar to those of Example 1 but containing 120 and 150 parts of Snowcal 7ML achieved erosion inception voltages around 3.3 kV, and a similar figure was obtained using 80 parts of a crushed limestone specified only as passing wholly through No. 200 British Standard mesh sieve.

CLAIMS

1.      A method of increasing the resistance to tracking failure of an insulating surface of a plastics material, based on one or more than one carbon chain polymer, that is exposed to an electrical stress of at least $10^4$ V/m comprising constituting a substantial fraction of the area of the surface of at least one species of low reactivity that has a standard free energy of decomposition of at least 1 eV at 300°K and is capable of a reversible addition reaction with energetic nucleophiles but substantially free of any irreversible reaction therewith.

2.      A method as claimed in Claim 1 distinguished by constituting at least fifteen per cent of the area of the surface of the said species of low reactivity.

3.      A method as claimed in Claim 1 or Claim 2 distinguished by using as the stable species one which undergoes a major change of geometry on its reversible reaction with an active nucleophile.

4.      A method as claimed in Claim 1 or Claim 2 distinguished by using as the stable species a carbonate ion.

5.      A method as claimed in Claim 1 or Claim 2 distinguished by using as the stable species the carbonate anion of calcium carbonate.

6.      A method as claimed in Claim 1 or Claim 2 distinguished by using as the stable species the anion of calcium sulphate, calcium orthophosphate, barium sulphate, strontium carbonate or barium carbonate.

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 339 013  (G.C. GAINER et al.)<br>* Claim 1; column 2, lines 8-25; column 3, lines 11-26; example 1 * | 1-4 | H 01 B    3/30<br>H 01 B    3/44<br>C 08 K    3/26 |
|   | --- | | |
| X | CHEMICAL ABSTRACTS, vol. 67, no. 20, 13th November 1967, page 8632, no. 91453x, Columbus, Ohio, US<br>& JP - A - 42 7692 (FURUKAWA ELECTRIC CO., LTD.) 29-03-1967 | 1-4 | |
|   | --- | | |
| X | KAUTSCHUK UND GUMMI - KUNSTSTOFFE, vol. 24, no. 8, August 1971, pages 417-420<br>C. PRAT et al.: "Anwendung von carbonathaltigen Füllstoffen in Mischungen aus vernetztem Polyäthylen zum Isolieren von Niederspannungsdrähten und -kabeln" * Tables 1-3, mixtures 4-6 * | 1-6 | |
|   | --- | | |
| X | CHEMICAL ABSTRACTS, vol. 69, no. 13, 23rd September 1968, page 4948, no. 52851x, Columbus, Ohio, US<br>& JP - A - 68 06 526 (FURUKAWA ELECTRIC CO., LTD.) 11-03-1968 | 1-5 | |
|   | ---                    -/- | | |

**TECHNICAL FIELDS SEARCHED (Int. Cl. ³)**

C 08 K
C 08 L
H 01 B

The present search report has been drawn up for all claims

| Place of search<br>THE HAGUE | Date of completion of the search<br>11-04-1984 | Examiner<br>HOFFMANN K.W. |
|---|---|---|

| | DOCUMENTS CONSIDERED TO BE RELEVANT | | Page 2 |
|---|---|---|---|
| **Category** | Citation of document with indication, where appropriate, of relevant passages | Relevant to claim | CLASSIFICATION OF THE APPLICATION (Int. Cl. ³) |
| X | CHEMICAL ABSTRACTS, vol. 95, no. 16, 19th October 1981, page 54, no. 134083z, Columbus, Ohio, US & RO - A - 66 240 (INTREPRINDEREA "ELECTROMURES") 13-06-1980 | 5 | |
| | --- | | |
| A | CHEMICAL ABSTRACTS, vol. 96, no. 6, 8th February 1982, page 83, no. 36795j, Columbus, Ohio, US & JP - A - 81 140 175 (MITSUBISHI PETROCHEMICAL CO., LTD.) 02-11-1981 | 5 | |
| | --- | | |
| A | GB-A-1 240 403 (ASSOCIATED ELECTRICAL INDUSTRIES) * Page 1, line 61 - page 2, line 107 * | | |
| | ----- | | TECHNICAL FIELDS SEARCHED (Int. Cl. ³) |

The present search report has been drawn up for all claims

| Place of search THE HAGUE | Date of completion of the search 11-04-1984 | Examiner HOFFMANN K.W. |
|---|---|---|